# EUROPÄISCHE PATENTANMELDUNG

(11) **EP 4 414 552 A1**
(43) Veröffentlichungstag der Anmeldung: **14.08.2024**
(21) Anmeldenummer: 23155804.0
(22) Anmeldetag: 09.02.2023
(51) Int. Cl.: F03D 7/02, F03D 7/04

(54) **VERFAHREN ZUM VERMEIDEN MECHANISCHER SCHWINGUNGEN EINER WINDENERGIEANLAGE**

(71) Anmelder: Wobben Properties GmbH, 26607 Aurich (DE)
(72) Erfinder: FLÖGEL, Martin, Dr., 17091 Mölln (DE); VON ASWEGE, Enno, 26629 Großefehn (DE)
(74) Vertreter: Eisenführ Speiser

(57) **Zusammenfassung**

Die Erfindung betrifft ein Verfahren zum Steuern einer Windenergieanlage (100, 202), wobei die Windenergieanlage (100, 202) einen Turm (102), einen Generator (101) und einen Rotor (106) mit in ihrem Blattwinkel verstellbaren Rotorblättern (108) aufweist, ein Betriebspunkt durch eine Anlagenleistung und eine Rotordrehzahl gekennzeichnet ist, zum Verändern oder Aufrechterhalten des Betriebspunktes wenigstens ein Aktuator jeweils über eine Ansteuergröße angesteuert wird, und das Ansteuern des Aktuators eine Schwingungsanregung wenigstens einer Komponentenschwingung einer schwingungsfähigen Komponente der Windenergieanlage (100, 202) beeinflusst, umfassend die Schritte: Bestimmen eines vorläufigen Ansteuersignals (401) für die Ansteuergröße, Ändern des vorläufigen Ansteuersignals (401) in ein modifiziertes Ansteuersignal (402), um die Schwingungsanregung zu verringern, wobei das vorläufige Ansteuersignal (401) so in das modifizierte Ansteuersignal (402) geändert wird, dass wenigstens ein Frequenzanteil aus dem vorläufigen Ansteuersignal (401) mit einem Frequenzbereich um eine Eigenfrequenz (413) der schwingungsfähigen Komponente reduziert wird, und/oder wenigstens ein Frequenzanteil aus einem aus dem vorläufigen Ansteuersignal (401) zu erwartenden resultierenden Anregungssignal, das die Komponentenschwingung anregt, mit einem Frequenzbereich um die Eigenfrequenz (413) der schwingungsfähigen Komponente reduziert wird, und Ansteuern des Aktuators basierend auf dem modifizierten Ansteuersignal (402).

## Beschreibung

Die vorliegende Erfindung betrifft ein Verfahren zum Steuern einer Windenergieanlage. Außerdem betrifft die Erfindung eine entsprechende Windenergieanlage.

Windenergieanlagen sind bekannt, sie erzeugen elektrischen Strom aus Wind. Eine Windenergieanlage ist dabei auch dem Wind ausgesetzt, der zu einer Belastung führen kann.

Eine mögliche Belastung ist, dass die Windenergieanlage in mechanische Schwingungen geraten kann. Im stationären Fall können solche Schwingungen besonders durch Wahl einer geeigneten Rotordrehzahl reduziert werden.

Es kommt dabei auch in Betracht, dass Stellgrößen, besonders Änderungen von Stellgrößen, eine Schwingung der Windenergieanlage anregen können.

Solche Stellgrößen können besonders die Verstellung von Blattwinkeln der Windenergieanlage und eine Änderung eines Generatormoments des Generators der Windenergieanlage sein. Auch eine Stellgröße zum Verstellen der Azimutausrichtung der Gondel der Windenergieanlage kommt in Betracht.

Besonders die Rotorblätter und der Turm der Windenergieanlage können zu Schwingungen neigen und als schwingfähige Komponenten angesehen werden. Sowohl die Rotorblätter als auch der Turm können Biegeschwingungen und Torsionsschwingungen ausführen, was besonders von der jeweiligen Anregung abhängen kann.

Werden solche Stellgrößen sprungförmig vorgegeben, kann dies eine Schwingung anregen. Auch eine wiederkehrende, insbesondere oszillierende Vorgabe einer Stellgröße kann je nach Frequenz eine Schwingung anregen.

Schwingungen durch Stellgrößen anzuregen, kann besonders dadurch vermieden werden, dass diese Stellgrößen nicht sprungförmig oder oszillierend vorgegeben werden. Besonders das Ansteuern mit einer sprungförmigen Stellgröße kann sich aber aus einem Bedarf ergeben, eine schnelle Veränderung des Betriebspunktes zu erreichen. Besonders eine aus Sicherheitsgründen geforderte schnelle Reduzierung der Drehzahl kann zu einer sprungförmigen Stellgröße führen. Aber auch starke Veränderungen besonders der Windgeschwindigkeit oder Windrichtung können zu großen, insbesondere sprungförmigen oder ähnlichen Stellgrößen führen.

Es ist daher oftmals kaum möglich, nur eine sanfte, insbesondere rampenförmige Stellgröße vorzugeben.

Der vorliegenden Erfindung liegt somit die Aufgabe zugrunde, zumindest eines der genannten Probleme zu adressieren. Insbesondere soll eine Lösung vorgeschlagen werden, bei der große Stellgrößenänderungen möglich sind, ohne eine Schwingung der Windenergieanlage zu stark anzuregen. Zumindest soll zu bisher bekannten Verfahren eine Alternative vorgeschlagen werden.

Erfindungsgemäß wird ein Verfahren nach Anspruch 1 vorgeschlagen. Das Verfahren betrifft somit das Steuern einer Windenergieanlage, was auch das Regeln einer Windenergieanlage beinhalten kann. Die Windenergieanlage weist einen Turm, einen Generator und einen Rotor mit in ihrem Blattwinkel verstellbaren Rotorblättern auf. Die Windenergieanlage kann einen Betriebspunkt einnehmen, der durch eine Anlagenleistung und eine Rotordrehzahl gekennzeichnet ist. Die Anlagenleistung kann die Leistung bezeichnen, die die Windenergieanlage erzeugt und in ein elektrisches Versorgungsnetz einspeist, also die elektrische Leistung, die die Windenergieanlage abgibt. Sie kann vereinfachend auch der Generatorleistung entsprechen oder ihr gleichgesetzt werden, die der Generator erzeugt. Beide Leistungen sind nicht identisch, weil besonders von der Generatorleistung zur abgegebenen Leistung noch Verluste abgehen können und Leistungsanteile zum Ansteuern bzw. Betreiben der Windenergieanlage abgehen können; zum Erläutern der vorliegenden Erfindung können diese Unterschiede aber vernachlässigt werden.

Zum Verändern oder Aufrechterhalten des Betriebspunktes wird wenigstens ein Aktuator jeweils über eine Ansteuergröße angesteuert. Ein solcher Aktuator kann eine Blattverstelleinrichtung sein, um ein Rotorblatt in seinem Anstellwinkel zu verändern. Meist sind mehrere Rotorblätter vorgesehen, die zugleich aber voneinander unabhängig in ihrem Blattwinkel verstellt werden können, wofür jeweils eine Blattverstelleinrichtung verwendet wird. Vereinfachend können aber sämtliche Blattverstelleinrichtungen zusammen betrachtet werden, besonders dann, wenn sie jeweils das gleiche Ansteuersignal erhalten. Eine Verstelleinrichtung zum Verstellen der Azimutausrichtung der Windenergieanlage, also eine Verstelleinrichtung zum Verstellen der Ausrichtung der Gondel der Windenergieanlage, kann ebenfalls ein solcher Aktuator sein. Das Signal, das die Verstellung der Blattverstelleinrichtung bzw. der Azimutverstelleinrichtung vorgibt, wird als ein Ansteuersignal verstanden. Ein Wert eines solchen Ansteuersignals kann als Ansteuergröße bezeichnet werden.

Eine weitere Ansteuergröße kann eine Größe als Vorgabe für ein Generatormoment sein. Ein generatorseitiger Wechselrichter, der besonders entsprechende Statorströme des Generators ansteuert, kann der entsprechende Aktuator sein.

Die Ansteuergröße bzw. ein Ansteuersignal für eine Blattverstelleinrichtung kann einen Blattwinkel, einen Differenzblattwinkel oder eine Verstellrate für die Blattverstelleinrichtung sein. Ein solcher Blattwinkel, Blattwinkeldifferenz oder Blattwinkelverstellrate kann unmittelbar als Sollgröße vorgegeben werden, beispielsweise durch eine entsprechende Steuerung, oder es kann das Ergebnis einer Regelung sein. Das Gleiche gilt für die Azimutverstelleinrichtung, bei der ein Azimutwinkel, ein Azimutdifferenzwinkel oder eine Azimutverstellrate die Ansteuergröße sein kann. Auch hier kann diese Ansteuergröße bzw. das Ansteuersignal unmittelbar vorgegeben werden oder das Ergebnis einer Regelung sein. Für beide Fälle kommt auch in Betracht, dass die Ansteuergröße bzw. das Ansteuersignal aus einer anderen Vorgabe berechnet wird.

Für das Generatormoment kann seine Größe oder Veränderung die Ansteuergröße bzw. das Ansteuersignal sein. Auch hier kann diese Ansteuergröße unmittelbar vorgegeben werden oder das Ergebnis einer Regelung sein. Bei dem Generatormoment als Ansteuersignal kommt besonders auch in Betracht, dass dies aus einer vorgegebenen Generatorleistung berechnet wird. Die vorgegebene Generatorleistung kann ihrerseits unmittelbar vorgegeben werden oder das Ergebnis einer Regelung sein. Als Ergebnis einer Regelung kann zu verstehen sein, dass dieses Ergebnis aus einem Soll-Istwert-Vergleich resultiert, direkt oder indirekt, insbesondere nachdem aus dem Soll-Istwert-Vergleich eine Regelabweichung resultiert, die über einen Regler gegeben wurde.

Das Ansteuern des Aktuators beeinflusst eine Schwingungsanregung einer Komponentenschwingung einer schwingungsfähigen Komponente der Windenergieanlage. Davon ausgehend wird weiter vorgeschlagen, ein vorläufiges Ansteuersignal für die Ansteuergröße zu bestimmen und das vorläufige Ansteuersignal in ein modifiziertes Ansteuersignal zu ändern, um die Schwingungsanregung zu verringern. Das Ändern des vorläufigen Ansteuersignals in das modifizierte Ansteuersignal kann auch als Modifizieren bezeichnet werden. Die Schwingungsanregung soll also bei Anwendung des modifizierten Ansteuersignals im Vergleich zur Ansteuerung mit dem vorläufigen Ansteuersignal, also ohne Modifizierung, verringert werden.

Dazu wird vorgeschlagen, dass das vorläufige Ansteuersignal so in das modifizierte Ansteuersignal geändert wird, dass wenigstens ein Frequenzanteil aus dem vorläufigen Ansteuersignal mit einem Frequenzbereich um eine Resonanzfrequenz der schwingungsfähigen Komponente in der Amplitude reduziert wird, ein der Eigenfrequenz der schwingungsfähigen Komponente entsprechender Frequenzanteil soll also herausgenommen werden. Allerdings kann kein Frequenzanteil herausgenommen werden, der exakt der Eigenfrequenz entspricht. Daher wird ein Frequenzanteil im Bereich der Eigenfrequenz herausgenommen. Insbesondere kann der Frequenzbereich um die Eigenfrequenz als ein Bereich von 10 % über und unter der Eigenfrequenz bezeichnet werden. Wenigstens in einem solchen Frequenzbereich soll ein Frequenzanteil aus dem vorläufigen Ansteuersignal herausgenommen werden.

Die Erläuterung des Herausnehmens ist ebenfalls anschaulich zu verstehen und vielmehr wird der Frequenzanteil des genannten Frequenzbereichs reduziert. Das vorläufige Ansteuersignal wird insbesondere in dem Frequenzbereich um die Eigenfrequenz, also insbesondere in diesem Bereich von +/- 10 % um die Eigenfrequenz, um wenigstens 50 % reduziert.

Schließlich wird der Aktuator basierend auf dem modifizierten Ansteuersignal angesteuert. Das bedeutet besonders, dass das modifizierte Ansteuersignal an den jeweiligen Aktuator zur Umsetzung gegeben wird. Das Ansteuersignal kann aber natürlich weiteren Veränderungen unterzogen werden, die beispielsweise für eine datentechnische Übertragung erforderlich sind, oder es kann von einem digitalen Signal in ein analoges Signal übertragen werden, um nur zwei anschauliche Beispiele zu nennen. Dem Grunde nach wird aber der Aktuator so gesteuert, wie das durch das modifizierte Ansteuersignal vorgegeben ist.

Es wurde besonders erkannt, dass starke Ansteuerungen eines Aktuators besonders als sprungförmiges Signal auftreten können. Besonders dann, wenn ein Betriebspunkt verändert wird, wird ein Sollwert sprungförmig verändert und dieser sprungförmig veränderte Sollwert kann das vorläufige Ansteuersignal bilden und somit wird dieser sprungförmige Sollwert in eine modifizierte Sollgröße geändert, die das modifizierte Ansteuersignal bildet. Eine solche Modifizierung kann unmittelbar für die sprungförmige Sollgröße vorgesehen sein. Es kommt aber auch in Betracht, dass die Modifizierung erst im Regelkreis, also nach einem Soll-Istwert-Vergleich oder dabei sogar nach einem Regler nach einem Soll-Istwert-Vergleich erfolgt. Befindet sich die Windenergieanlage in einem stationären Betriebszustand und wird dann eine sprungförmige Sollgröße vorgegeben, kann auch die sprungförmige Sollgröße nach dem Soll-Istwert-Vergleich noch sprungförmig sein, besonders im Falle eines P-Reglers. Die Sollgröße, sei sie nun sprungförmig oder anders ausgebildet, kann auch unmittelbar als Steuergröße und damit Ansteuersignal für den Aktuator verwendet werden.

Hier wurde besonders erkannt, dass ein sprungförmiges Signal, aber auch andere Signalformen, diverse Frequenzanteile beinhalten kann, einschließlich Frequenzanteile bzw. Frequenzbereiche, die im Bereich der Eigenfrequenz der schwingungsfähigen Komponente liegen. Solche Anteile können reduziert werden, um dadurch eine Schwingungsanregung und/oder Schwingung der schwingungsfähigen Komponente zu reduzieren, da schwingungsfähige Komponenten hier am empfindlichsten reagieren.

Besonders kann ein sprungförmiger Drehmomentwechsel eine Turmschwingung anregen. In diesem Fall wird vorgeschlagen, dass die Eigenfrequenz des Turmes berücksichtigt wird, um das vorläufige Ansteuersignal in das modifizierte Ansteuersignal zu ändern.

Bei einer sprungförmigen Veränderung der Blattwinkel kommt besonders in Betracht, dass dadurch eine Torsionsschwingung und/oder Biegeschwingung der jeweiligen Rotorblätter angeregt wird und daher eine entsprechende Eigenfrequenz des jeweiligen Rotorblatts berücksichtigt wird, also ein Frequenzanteil im Bereich der Eigenfrequenz des Rotorblatts reduziert wird, um ein weiteres Beispiel zu nennen. Es kommt aber auch in Betracht, dass nicht nur eine Eigenfrequenz, sondern mehrere Eigenfrequenzen berücksichtigt werden. Beispielsweise kann zu einer ersten Eigenfrequenz einer Turmschwingung eine höhere Eigenfrequenz der Turmschwingung berücksichtigt werden. Es kann also beispielsweise eine erste und dritte Schwingmode des Turmes berücksichtigt werden. In diesem Fall können entsprechend zwei Frequenzanteile aus dem vorläufigen Ansteuersignal reduziert werden, nämlich einer mit einem Frequenzbereich um die erste Eigenfrequenz und ein weiterer mit einem Frequenzbereich um die dritte Eigenfrequenz.

Außerdem oder alternativ wird vorgeschlagen, dass das vorläufige Ansteuersignal so in das modifizierte Ansteuersignal geändert wird, dass wenigstens ein Frequenzanteil aus einem aus dem vorläufigen Ansteuersignal zu erwartenden resultierenden Anregungssignal, das die Komponentenschwingung anregt, mit einem Frequenzbereich um die Eigenfrequenz der schwingungsfähigen Komponente reduziert wird. Demnach wird vorgeschlagen, nicht das Ansteuersignal, sondern das resultierende Anregungssignal zu betrachten. Dementsprechend wird das vorläufige Ansteuersignal so in das modifizierte Ansteuersignal geändert, dass wenigstens ein Frequenzanteil im zu erwartenden Anregungssignal verändert wird. Diese Veränderung ist wiederum eine Reduktion im Frequenzbereich um die Eigenfrequenz.

Das Ansteuersignal wird, um es weiter zu erläutern, zu dem Anregungssignal führen. Wenn das Ansteuersignal bspw. ein Sollwert für ein Generatormoment ist, kann das Generatormoment, oder eine Kraft, die aus dem Generatormoment auf den Turm wirkt, das resultierende Anregungssignal sein, das somit zu erwarten ist. Besteht ein linearer und zeitinvarianter Zusammenhang zwischen dem Ansteuersignal und dem daraus resultierenden Anregungssignal, oder kann das zumindest vereinfachend angenommen werden, führt eine Veränderung eines Frequenzanteils im Ansteuersignal zu einer entsprechenden Änderung in dem Anregungssignal. Die Änderung hat also in beiden Signalen denselben Frequenzbereich und dieselbe relative Amplitude.

Die Modifizierung kann dann direkt im Ansteuersignal vorgenommen werden und sich dabei an der Eigenfrequenz der schwingungsfähigen Komponente orientieren, dort also insbesondere einen Frequenzanteil herausfiltern.

Ist der Zusammenhang zwischen dem Ansteuersignal und dem daraus resultierenden Anregungssignal aber nichtlinear, kann ein solches Vorgehen zu ungenau oder sogar falsch sein. Besonders dann wird vorgeschlagen, eine Modifizierung über das zu erwartende resultierende Anregungssignal vorzunehmen. Es kann dazu das zu erwartende resultierende Anregungssignal aus dem vorläufigen Ansteuersignal bestimmt werden, z.B. aus Voruntersuchungen und/oder Simulationen, oder es können geeignete Anlagenmodelle verwendet werden. Das zu erwartende resultierende Anregungssignal wird dann um den Frequenzanteil mit dem Frequenzbereich um die Eigenfrequenz der schwingungsfähigen Komponente reduziert, nämlich in ein modifiziertes Anregungssignal. Aus dem modifizierten Anregungssignal wird dann das modifizierte Ansteuersignal zurückgerechnet.

Ist der Zusammenhang linear und zeitinvariant, sollten beide Wege, das Ansteuersignal zu modifizieren, zu dem gleichen Ergebnis führen, nämlich zu einem Anregungssignal, in dem ein Frequenzanteil mit dem Frequenzbereich um die Eigenfrequenz der schwingungsfähigen Komponente reduziert ist.

Gemäß einem Aspekt wird vorgeschlagen, dass zur Dämpfung der wenigstens einen Komponentenschwingung ein Dämpfungssignal auf das modifizierte Ansteuersignal aufgeschaltet wird. Das erfolgt insbesondere so, dass das Dämpfungssignal in Abhängigkeit von wenigstens einer erfassten Komponentenschwingung bestimmt wird.

Somit wird in einem ersten Schritt das vorläufige Ansteuersignal in das modifizierte Ansteuersignal geändert. Das kann besonders unabhängig von erfassten Signalen erfolgen. Das vorläufige Ansteuersignal kann besonders ein vorgegebener Sollwert, also ein vorgegebenes Sollsignal, insbesondere sprungförmiges Sollsignal sein. Seine Änderung in das modifizierte Ansteuersignal benötigt nur die wenigstens eine Eigenfrequenz der wenigstens einen schwingungsfähigen Komponente. Eine solche Eigenfrequenz ist oftmals gut bekannt, da sie eine feste Systemeigenschaft bildet. Gegebenenfalls kann sie nach längerer Zeit überprüft und gegebenenfalls angepasst werden.

Auf dieses modifizierte Ansteuersignal wird das Dämpfungssignal aufgeschaltet. Das Dämpfungssignal kann besonders von der erfassten Komponentenschwingung abhängen und kann besonders auf einer Rückführung der erfassten Komponentenschwingung basieren. Eine solche Rückführung kann dafür zeitlich abgeleitet, integiert und/oder phasenverschoben sein.

Hier wurde besonders erkannt, dass das Ändern des vorläufigen Ansteuersignals in das modifizierte Ansteuersignal von einer erfassten Komponentenschwingung unabhängig erfolgt und damit im Grunde immer mit gleicher Amplitude erfolgt, jedenfalls für gleiche vorläufige Ansteuersignale, solange das Dämpfungssignal nicht aufgeschaltet ist.

Das Dämpfungssignal hängt aber in seiner Amplitude von der Amplitude der erfassten Komponentenschwingung ab. Wird also eine sehrgeringe Komponentenschwingung durch das modifizierte Ansteuersignal erreicht, ergibt sich auch nur ein Dämpfungssignal mit geringer Amplitude. Das Ändern des vorläufigen Ansteuersignals in das modifizierte Ansteuersignal verfolgt somit eine andere Strategie als das Aufschalten des Dämpfungssignals. Beide Ansätze sollen jedoch Komponentenschwingungen reduzieren.

Außerdem wird das Aufschalten des Dämpfungssignals auf das modifizierte Ansteuersignal vorgeschlagen, sodass die Modifizierung nicht das aufgeschaltete Dämpfungssignal betrifft. Hier wurde besonders erkannt, dass andernfalls das Modifizieren den Effekt des Dämpfungssignals wieder verringern könnte, ggf. sogar auslöschen, denn die Frequenz des Dämpfungssignals wird häufig auch in der Nähe der Eigenfrequenz der schwingungsfähigen Komponente liegen. Bei der Modifizierung würde somit genau ein solcher Frequenzanteil entfernt werden.

Es ergibt sich somit durch beide Maßnahmen ein Synergieeffekt. Davon abgesehen kann das Dämpfungssignal auch Komponentenschwingungen dämpfen, die anderweitig als durch das Ansteuersignal hervorgerufen wurden.

Gemäß einem Aspekt wird vorgeschlagen, dass zum Ändern des vorläufigen Ansteuersignals in das modifizierte Ansteuersignal ein Bandsperrfilter, insbesondere Notchfilter verwendet wird, durch das der wenigstens eine Frequenzanteil aus dem vorläufigen Ansteuersignal reduziert wird. Somit kann das vorläufige Ansteuersignal gefiltert werden über dieses Notchfilter, und das Notchfilter kann aufdie jeweilige Eigenfrequenz eingestellt werden. Es kommt auch in Betracht, dass ein weiteres Notchfilter verwendet wird, wenn mehr als eine Eigenfrequenz berücksichtigt werden soll.

Das Notchfilter kann auch auf ein zu einem vorläufigen Ansteuersignal zu erwartendes resultierendes Anregungssignal angewendet werden, um ein modifiziertes Anregungssignal zu erhalten, das in das modifizierte Ansteuersignal zurücktransformiert wird. Auch dadurch würde das Notchfilter auf das vorläufige Ansteuersignal angewendet werden. Das Verfahren ist damit auf einfache Art und Weise umsetzbar und über das Notchfilter kann auch eingestellt werden, wie stark die Reduzierung des jeweiligen Frequenzanteils vorgenommen werden soll und es kann auch eingestellt werden, wie eng der Frequenzbereich um die jeweilige Eigenfrequenz zu wählen ist.

Gemäß einem Aspekt wird vorgeschlagen, dass das vorläufige Ansteuersignal sprungförmig ist, ein vorgegebener Sollwert ist und/oder zum Verändern des Betriebspunktes vorgegeben wird. Hier wurde besonders erkannt, dass ein sprungförmiges Ansteuersignal Frequenzanteile nahe wenigstens einer Eigenfrequenz aufweisen kann und diese durch die vorgeschlagene Änderung in das modifizierte Ansteuersignal reduziert werden können, um eine Schwingungsanregung zu vermeiden.

Es wurde auch erkannt, dass bereits das Ändern eines vorgegebenen Sollwertes, insbesondere, wenn dieser sprungförmig ist, in ein modifiziertes Signal Schwingungsanregungen vermeiden kann.

Es wurde auch erkannt, dass besonders beim Verändern des Betriebspunktes ein Ansteuersignal auftreten kann, nämlich besonders durch entsprechende Steuervorschriften erzeugt werden kann, das Schwingungen anregen kann. Besonders wurde erkannt, dass das Verändern des Betriebspunktes eine starke Veränderung sein kann. Besonders sind mögliche Veränderungen des Betriebspunktes, die kritisch sein können, starke Reduzierungen der Rotordrehzahl oder starke Reduzierungen der Anlagenleistung. Besonders solche Betriebspunkte können zu sehr starken Veränderungen und damit sehr großen Ansteuersignalen, insbesondere sprungförmigen Ansteuersignalen, führen, die allein durch Änderungen der Windgeschwindigkeit seltener und/oder nicht so stark auftreten.

Gemäß einem Aspekt wird vorgeschlagen, dass die Ansteuergröße ein Drehmomentsollwert des Generators der Windenergieanlage ist und insbesondere der Drehmomentsollwert aus einem empfangenen Leistungssollwert bestimmt wird. Bei diesem Aspekt geht es also um die Ansteuerung des Generators über das Generatormoment, was als Synonym für das Drehmoment des Generators angesehen werden kann.

Die resultierende Schwingungsanregung ist hierbei eine Anregung einerTurmschwingung, insbesondere eine Biegeschwingung des Turmes. Hier wurde erkannt, dass durch das Ansteuern des Generatormoments, besonders, wenn dieses dadurch näherungsweise sprungförmig verändert wird, zu einer Art Drehmomentruck führen kann, der wiederum zu einer Bewegung des Generators quer zur Generatorachse führen kann. Der Turm kann hierdurch somit besonders im Kopfbereich quer zur Generatorachse schwingen und damit quer zum Wind, wenn die Windenergieanlage in den Wind ausgerichtet ist.

Dazu wird vorgeschlagen, dass das modifizierte Ansteuersignal so bestimmt wird, dass ein Frequenzanteil um die Eigenfrequenz des Turmes, insbesondere bezogen auf eine Biegeschwingung des Turmes, reduziert wird.

Hier wurde besonders erkannt, dass ein solcher Drehmomentsprung zu einer solchen Biegeschwingung des Turmes führen kann und dass dies vermieden oder zumindest verringert werden kann, indem der Drehmomentsollwert um den Frequenzanteil reduziert wird, der um die Eigenfrequenz des Turmes liegt. Aber auch hier kommt in Betracht, dass eine weitere Eigenfrequenz des Turmes zusätzlich betrachtet werden kann, indem um eine solche zweite Eigenfrequenz ein weiterer Frequenzanteil aus dem Drehmomentsollwert herausgenommen oder reduziert wird. Dadurch kann die Lebensdauer des Turmes verlängert werden bzw. eine Verkürzung der Lebensdauer des Turmes kann vermieden werden, ohne dass aber das Umsetzen des ursprünglichen Drehmomentwollwertes signifikant verzögert oder abgeschwächt wird.

Gemäß einem Aspekt wird vorgeschlagen, dass die Ansteuergröße ein Blattwinkel oder eine Pitchrate zum Verstellen jeweils eines Blattwinkels ist, und insbesondere der Blattwinkel bzw. die Pitchrate aus einer Anforderung einer Einregelung und/oder Änderung der Rotordrehzahl bestimmt wird, die resultierende Schwingungsanregung eine Anregung wenigstens einer Blattschwingung ist, insbesondere einer Torsionsschwingung des Blattes, und/oder einer kollektiven Schwingmode der Blätter zusammen mit einem Spinner oder einer Nabe und das modifizierte Ansteuersignal so bestimmt wird, dass ein Frequenzanteil um die Eigenfrequenz des Blattes, besonders bezogen auf die Torsionsschwingung des Blattes, reduziert wird bzw. das modifizierte Ansteuersignal so bestimmt wird, dass ein Frequenzanteil um die Eigenfrequenz der kollektiven Schwingmode der Blätter und des Spinners oder der Nabe reduziert wird.

Hier wurde besonders erkannt, dass das Verstellen des Blattwinkels, sei es direkt oder über die Vorgabe einer Pitchrate, zu einer Torsionsschwingung des Rotorblatts führen kann, die nämlich durch das Verstellen angeregt werden kann. Um das zu reduzieren, wird vorgeschlagen, die entsprechende Ansteuergröße, also eine Vorgabe des Blattwinkels oder eine Vorgabe einer Pitchrate so zu verändern, dass ein entsprechender schwingungsanregender Frequenzanteil reduziert wird.

Besonders zur Regelung oder Veränderung der Rotordrehzahl kann ein solches Ansteuersignal verwendet werden. Durch die vorgeschlagene Lösung kann auch eine schnelle Verstellung der Rotorblätter in ihrem Blattwinkel bei gleichzeitiger Reduzierung einer Schwingungsanregung erreicht werden.

Gemäß einem Aspekt wird vorgeschlagen, dass der wenigstens eine Aktuator über die mindestens eine Ansteuergröße angesteuert wird, um den aktuellen Betriebspunkt in einen neuen Betriebspunkt zu ändern, und dass die Windenergieanlage im neuen Betriebspunkt gegenüber dem alten Betriebspunkt eine reduzierte Anlagenleistung und/oder eine reduzierte Drehzahl aufweist. Außerdem oder alternativ wird vorgeschlagen, dass der neue Betriebspunkt ein Anlagenstopp ist. Außerdem oder alternativ wird vorgeschlagen, dass das vorläufige Ansteuersignal für eine möglichst schnelle Veränderung zum neuen Betriebspunkt bestimmt wird. Insbesondere wird es für eine Notabschaltung der Windenergieanlage und/oder eine Notbremsung des Rotors bestimmt.

Es wird somit eine Veränderung des Betriebspunktes vorgeschlagen und die erfolgt durch die Ansteuergröße und damit durch das vorläufige und dann modifizierte Ansteuersignal. Der neue Betriebspunkt kann eine reduzierte Anlagenleistung sein, nämlich im Vergleich zu dem aktuellen Betriebspunkt, also dem Betriebspunkt, von dem aus die Veränderung startet, zu dem also das Ansteuersignal angewendet wird. Besonders ist eine Reduzierung der Anlagenleistung um wenigstens 50 % im Vergleich zur Anlagenleistung des aktuellen Betriebspunktes vorgesehen, bis hin zu einer Reduzierung der Anlagenleistung auf null. Hier wurde besonders erkannt, dass solche starken Reduzierungen der Anlagenleistung entsprechend starke Ansteuersignale hervorrufen, die Schwingungen auslösen können.

Eine andere Variante ist, dass der neue Betriebspunkt eine reduzierte Drehzahl aufweist, also gegenüber dem aktuellen Betriebspunkt eine reduzierte Drehzahl aufweist. Insbesondere ist die Drehzahl um wenigstens 50 % gegenüber ihrem vorigen Wert zum aktuellen Betriebspunkt reduziert. Es kommt auch in Betracht, dass die Drehzahl auf null reduziert wird. Auch hier wird von einer starken Änderung des Betriebspunktes, nämlich einem starken Abbremsen des Rotors, also eine starke Reduzierung der Rotordrehzahl, die synonym für Drehzahl steht, ausgegangen. Auch hier kann eine Schwingungsanregung erwartet werden, sodass die vorgeschlagene Maßnahme zum Vermeiden einer solchen Schwingungsanregung vorgeschlagen wird.

Entsprechend kann der neue Betriebspunkt ein Anlagenstopp sein, bei dem die Anlagenleistung auf null reduziert ist und/oder die Drehzahl auf null reduziert ist. Somit kann ein Anlagenstopp auf schnelle Art und Weise erreicht werden, bei gleichzeitiger Vermeidung einer zu starken Schwingungsanregung der wenigstens einen schwingungsfähigen Komponente. Insbesondere wird hierbei eine Schwingungsanregung des Turmes vermieden bzw. geringgehalten.

Insbesondere eine Notabschaltung oder Notbremsung kann hiermit durchgeführt werden. Die Veränderung des Ansteuersignals vermeidet das Anregen einer Schwingung, insbesondere einer Turmschwingung, verzögert aber gleichzeitig die Notabschaltung bzw. Notbremsung nicht signifikant.

Gemäß einem Aspekt wird vorgeschlagen, dass das vorläufige Ansteuersignal als zeitlicher Verlauf vorgegeben wird, mit sich mehrfach und/oder kontinuierlich verändernden Werten, insbesondere mit mehreren zeitlich verteilten Stützstellen, wobei der Verlauf jeweils zwischen zwei benachbarten Stützstellen einen linearen Abschnitt aufweist. Es wird somit ein Stützsteuersignal hinsichtlich seines Verlaufs vorgegeben. Eine solche Vorgabe bzw. ein solcher zeitlicher Verlauf geht übereinen sprungförmigen Verlauf hinaus, der zwar auch an seiner Sprungstelle eine Veränderung in seinem Wert aufweist, aber der damit nicht sich mehrfach ändernde oder kontinuierlich verändernde Werte aufweist. Es ist aber nicht ausgeschlossen, dass ein sprungförmiger Verlauf Teil des zeitlichen Verlaufs sein kann, in dem bspw. der zeitliche Verlauf mit einem sprungförmigen Verlauf beginnt.

Ein solcher zeitlicher Verlauf kann für ein bestimmtes Steuerungsziel vorgesehen sein, für das vorbestimmt werden kann, welcher Verlauf einer Ansteuergröße benötigt wird, um dieses Ziel zu erreichen.

Besonders kann der zeitliche Verlauf mehrere zeitlich verteilte Stützstellen aufweisen, wobei der Verlauf jeweils zwischen zwei benachbarten Stützstellen einen linearen Abschnitt aufweist. Der zeitliche Verlauf kann somit durch diese Stützstellen vorgegeben werden und dadurch ist eine einfache Vorgabe möglich, die bei digitaler Umsetzung kaum Speicherplatz benötigt.

Ein zeitlicher Verlauf des Ansteuersignals, sei es nun durch Vorgabe von Stützstellen oder anderweitig, kann beispielsweise zur Ansteuerung einer Blattverstelleinrichtung zunächst auf einen ersten Wert springen, sich dann im Laufe der Zeit linear erhöhen, um das Rotorblatt so schnell wie möglich zu verstellen, und kann sich dann linear wieder verringern, um das Verstellen des Rotorblatts mit hoher, aber gleichwohl abnehmender Verstellgeschwindigkeit fortzusetzen. Durch die wieder etwas abnehmende Verstellgeschwindigkeit kann ein sanfteres Erreichen der Endposition des Rotorblatts erreicht werden, um nur ein Beispiel zu nennen.

Auch für ein solches Ansteuersignal, das über einen zeitlichen Verlauf vorgegeben wird, ist es vorteilhaft, dieses um einen Frequenzanteil mit einem Frequenzbereich um wenigstens eine Eigenfrequenz einer schwingungsfähigen Komponente zu reduzieren. Der vorgesehene Verlauf der Blattverstellung wird dadurch wenig beeinflusst, das Anregen einer Schwingung, die im vorliegenden Beispiel besonders eine Torsionsschwingung des Rotorblatts sein kann, ist dadurch aber vermeidbar, zumindest eine entsprechende Anregung verringerbar.

Die Verwendung verteilter Stützstellen kann besonders dadurch realisiert sein, dass diese Stützstellen in einer Tabelle hinterlegt sind. Bei Bedarf kann auf diese hinterlegten Werte zugegriffen werden und über Stützstellen mit verbindendem linearen Abschnitt kann das Ansteuersignal auch gut definiert und dann in das modifizierte Ansteuersignal geändert werden.

Gemäß einem Aspekt wird vorgeschlagen, dass in Abhängigkeit von einem anzusteuernden Zielarbeitspunkt, insbesondere zum Ausführen eines Nothalts, und optional in Abhängigkeit von einem aktuellen Arbeitspunkt ein zeitlicher Verlauf des vorläufigen Ansteuersignals ausgewählt wird, insbesondere aus einer Tabelle. Hier liegt besonders der Gedanke zugrunde, dass ein neuer Zielarbeitspunkt so schnell wie möglich angefahren werden soll. Ein Nothalt ist ein solcher möglicher Zielarbeitspunkt. Um diesen Nothalt anzufahren, oder einen anderen Arbeitspunkt, müssen die Rotorblätter möglichst schnell verstellt werden. Möglicherweise wird auch ergänzend ein Generatormoment zum Abbremsen eingestellt.

Wie Rotorblätter für einen solchen Nothalt oder anderen Zielarbeitspunkt zu verstellen sind, kann bekannt oder vorherbestimmbar sein. Besonders kommt in Betracht, dass entsprechende Blattverstellantriebe so schnell wie möglich auf eine maximale Verstelldrehzahl beschleunigt werden und zum Ende des Verstellens der Rotorblätter möglichst spät zu einer Verstellgeschwindigkeit von null zurückgefahren werden. Ein solcher vorgesehener und/oder idealer Verlauf kann in einer Tabelle hinterlegt werden und das vorläufige Ansteuersignal bilden. Auch ein solcher Verlauf kann einen Frequenzanteil mit einem Frequenzbereich um eine Eigenfrequenz aufweisen. Daher wird vorgeschlagen, auch ein solches vorläufiges Ansteuersignal in ein modifiziertes Ansteuersignal zu ändern, um diesen Frequenzanteil zu reduzieren, um dadurch die Anregung der wenigstens einen Eigenfrequenz zu verringern.

Wie genau dieses Ansteuersignal aussieht, insbesondere, wie genau eine Blattverstellung oder Blattverstellrate aussieht, hängt auch von dem aktuellen Betriebspunkt ab. Arbeitet die Windenergieanlage mit Nenndrehzahl, kann es länger dauern, den Rotor abzubremsen. Besonders in einem solchen Nennbetrieb ist die Drehzahl hoch und es kann länger dauern, sie zu reduzieren. Entsprechend kann sich ein anderer zeitlicher Verlauf des vorläufigen Ansteuersignals ergeben, als wenn die Drehzahl, die verringert werden soll, bereits niedriger als die Nenndrehzahl ist.

Daher kann es vorteilhaft sein, den zeitlichen Verlauf des vorläufigen Ansteuersignals auch in Abhängigkeit von einem aktuellen Arbeitspunkt zu bestimmen.

Dadurch können sich selbst für diesen einen Zielarbeitspunkt des Nothalts verschiedene vorläufige Ansteuersignale ergeben, nämlich in Abhängigkeit von dem aktuellen Arbeitspunkt. Zusätzlich können auch andere Arbeitspunkte als Zielarbeitspunkte in Betracht kommen, sodass sich viele Möglichkeiten für den zeitlichen Verlauf des vorläufigen Ansteuersignals ergeben können.

Solche vielen Möglichkeiten können in einer Tabelle hinterlegt werden und zum Bestimmen des vorläufigen Ansteuersignals braucht nur der zeitliche Verlauf des vorläufigen Ansteuersignals aus der Tabelle ausgewählt zu werden, nämlich insbesondere in Abhängigkeit von dem aktuellen Arbeitspunkt und dem Zielarbeitspunkt. Besonders vorteilhaft ist es, wenn die vorläufigen Ansteuersignale, die als zeitliche Verläufe in der Tabelle abgelegt sind, durch die Verwendung von Stützstellen, insbesondere wenigen Stützstellen, hinterlegt sind. Dann kann mit wenig Speicheraufwand eine Vielzahl von möglichen vorläufigen Ansteuersignalen hinterlegt werden.

Es kommt in Betracht, zwischen zwei oder mehreren hinterlegten vorläufigen Ansteuersignalen zu interpolieren. Beträgt beispielsweise die aktuelle Drehzahl 11,5 Umdrehungen pro Minute, während aber in der Tabelle nur vorläufige Ansteuersignale für eine Drehzahl von 11 Umdrehungen pro Minute und 12 Umdrehungen pro Minute hinterlegt sind, kann zwischen diesen beiden hinterlegten vorläufigen Ansteuersignalen interpoliert werden. Dazu kann beispielsweise zu den Stützstellen, also jeweils zu den zugehörigen Zeitpunkten, eine Interpolation zwischen den beiden Werten des betreffenden Zeitpunkts durchgeführt werden.

Gemäß einem Aspekt wird vorgeschlagen, dass die Ansteuergröße ein Blattwinkel oder eine Pitchrate zum Verstellen jeweils eines der Rotorblätter in ihrem Blattwinkel ist, und insbesondere der Blattwinkel bzw. die Pitchrate aus einer Anforderung einer Einregelung und/oder Änderung der Rotordrehzahl bestimmt wird, und dass das modifizierte Ansteuersignal so bestimmt wird, dass wenigstens ein Frequenzanteil mit einem Frequenzbereich um wenigstens eine Eigenfrequenz des Turmes, insbesondere um eine Eigenfrequenz einer Biegung des Turmes in Nickrichtung reduziert wird.

Es wird somit besonders vorgeschlagen, ein Ansteuersignal zum Verändern des Blattwinkels der Rotorblätter zu berücksichtigen. Hier wurde besonders erkannt, dass durch das Verstellen der Blattwinkel der Rotorblätter, besonders, wenn dies schnell erfolgt, eine Windlast auf den Rotor, je nach Verstellrichtung, reduziert werden kann, wodurch sich eine Kraft in Nickrichtung auf die Windenergieanlage verringert, sodass eine Schwingung des Turmes in Nickrichtung resultieren kann. Daher wird vorgeschlagen, das vorläufige Ansteuersignal in das modifizierte Ansteuersignal so zu ändern, dass ein entsprechender Frequenzanteil reduziert wird, sodass eine solche Schwingungsanregung des Turmes in Nickrichtung reduziert wird.

Es wurde auch erkannt, dass der Zusammenhang zwischen der Blattverstellung und einem resultierenden Anregungssignal, das die Turmschwingung anregt, nicht linear und zeitinvariant sein muss, und somit in Betracht kommt, dass sich ein Frequenzspektrum des Ansteuersignals zum resultierenden Anregungssignal hin verändert. In dem Fall muss ein Frequenzanteil im Anregungssignal mit einem Frequenzbereich um eine Eigenfrequenz des Turmes nicht exakt einem Frequenzanteil mit einem Frequenzbereich um die Eigenfrequenz des Turmes im Ansteuersignal entsprechen. Bei nichtlinearen Zusammenhängen kommt sogar in Betracht, dass sich auch eine Amplitudenverteilung verändert.

Es wird ergänzend oder alternativ für diesen Fall vorgeschlagen, das modifizierte Ansteuersignal so zu bestimmen, dass wenigstens ein Frequenzanteil aus einem aus dem vorläufigen Ansteuersignal zu erwartenden resultierenden Anregungssignal, das die Turmschwingung anregt, mit einem Frequenzberiech um eine Eigenfrequenz des Turmes reduziert wird. Auch hier kann insbesondere eine Eigenfrequenz einer Biegung des Turmes in Nickrichtung zugrunde gelegt werden. Ein solcher Zusammenhang zwischen dem Frequenzanteil im Anregungssignal zu einem korrespondierenden Frequenzanteil im vorläufigen Ansteuersignal kann durch Voruntersuchungen bestimmt werden, oder durch Simulationen. Ein solcher Zusammenhang kann auch amplitudenabhängig sein, also von der Amplitude des Ansteuersignals abhängen. Der Zusammenhang kann auch von der Größe des vorherrschenden Windes abhängen. Auch diese Zusammenhänge können durch Voruntersuchungen und/oder Simulationen bestimmt werden und hinterlegt werden. Im Anwendungsfall können sie dann abgerufen werden.

Gemäß einem Aspekt wird vorgeschlagen, dass die wenigstens eine Eigenfrequenz der wenigstens einen schwingungsfähigen Komponente im laufenden Betrieb aus aufgenommenen Messgrößen ermittelt wird, insbesondere durch Verwendung einer Parameteridentifikation, und das vorläufige Ansteuersignal unter Verwendung dieser wenigstens einen ermittelten Eigenfrequenz in das modifizierte Ansteuersignal geändert wird, und/oder das Ändern des vorläufigen Ansteuersignals in das modifizierte Ansteuersignal adaptiv erfolgt, indem wenigstens eine verwendete Eigenfrequenz an die wenigstens eine erfasste Eigenfrequenz angepasst wird.

Eine Eigenfrequenz eines Systems bzw. hier einer schwingungsfähigen Komponente ist eine Systemeigenschaft und insoweit unveränderlich, solange das System sich nicht ändert. Es wurde aber erkannt, dass eine Veränderung des Systems in Betracht kommt. Besonders Rotorblätter können mit der Zeit ihre Steifigkeit verändern und/oder ein Verschmutzungsgrad kann eine Änderung hervorrufen. Es kommen auch besondere Betriebssituationen in Betracht, bei denen sich eine Eigenfrequenz verändern kann, nämlich insbesondere eine Vereisung eines Rotorblatts kann eine solche besondere Betriebssituation sein.

Ebenfalls wurde erkannt, dass das Erfassen einer Eigenfrequenz auch bei einer Neuinstallation, also bei dem Aufbau einer Windenergieanlage oder der Änderung einer Windenergieanlage, vorteilhaft sein kann, weil dadurch die richtige Eigenfrequenz erfasst wird. Besonders kann für den Turm einer Windenergieanlage die Eigenfrequenz aus dem Turmdesign bekannt sein, sie kann aber durch das Fundament beeinflusst werden. Besonders kann vom Untergrund abhängen, wie stark das Fundament eine Bewegung zulässt und dadurch die Eigenfrequenz des Turmes verändern kann. Es wurde aber auch erkannt, dass die Eigenfrequenz des Turmes in Nick- und Gierrichtung unterschiedlich ausfallen kann. Auch eine Veränderung von Einrichtungen in der Gondel, die auf dem Turm lastet, kann dort zu einer Gewichtsveränderung und damit zu einer Veränderung der Eigenfrequenz führen.

Zudem wurde erkannt, dass das Modifizieren des Ansteuersignals um den Frequenzanteil umso genauer durchgeführt werden kann, je genauer die Eigenfrequenz jeweils bekannt ist. Ist die Eigenfrequenz gut bekannt, kann der Frequenzbereich des Frequenzanteils um die Eigenfrequenz kleiner gewählt werden, wodurch ein geringerer Anteil aus dem Ansteuersignal reduziert werden muss, wodurch das Ansteuersignal umso weniger verändert wird. Das wiederum führt dazu, dass das vorläufige Ansteuersignal, also das, das idealerweise zu verwenden wäre, möglichst wenig verändert wird.

Die Eigenfrequenz kann dadurch ermittelt werden, dass beispielsweise eine freie Schwingung der jeweiligen Komponente, also beispielsweise eine freie Schwindung des Turmes, erfasst wird. In diesem Fall kann die erfasste Schwingung näherungsweise der Eigenfrequenz entsprechen und als identifizierte Eigenfrequenz verwendet werden.

Eine andere Möglichkeit besteht darin, eine Schwingung gezielt anzuregen, was mit kleiner Amplitude erfolgen kann, und dann das Ausschwingen der schwingungsfähigen Komponente, also beispielsweise wieder des Turmes, oder auch des Rotorblatts, zu erfassen. Dadurch kann die Eigenfrequenz genau bestimmt werden, denn eine solche ausklingende Schwingung ist die Definition einer Eigenfrequenz.

Es kommt aber auch in Betracht, die Eigenfrequenz durch eine Parameteridentifikation zu erfassen, insbesondere auch ständig im laufenden Prozess zu erfassen, also gegebenenfalls auch ständig nachzuführen. Eine solche Parameteridentifikation kann besonders so durchgeführt werden, dass ein Modell parallel zu dem System betrieben wird, von dem die Eigenfrequenz identifiziert werden soll. Die wenigstens eine Eigenfrequenz bildet dann in dem Modell eine veränderliche Größe, die so lange verändert werden kann, z.B. durch Verändern eines Parameters des Modells, bis sich das Modell und das parallel laufende System gleich verhalten, insbesondere ein gleiches Ein-/Ausgangsverhalten aufweisen. Mit der so ermittelten Eigenfrequenz kann dann das vorläufige Ansteuersignal in das modifizierte Ansteuersignal geändert werden. Dieses Ändern verwendet also die ermittelte, insbesondere identifizierte Eigenfrequenz, bzw. mehrere ermittelte Eigenfrequenzen, wenn mehrere Eigenfrequenzen betrachtet werden.

Es kommt aber auch in Betracht, dass eine Eigenfrequenz hinterlegt ist, und auf der basierend das Ändern des vorläufigen Ansteuersignals in das modifizierte Ansteuersignal durchgeführt wird. Wird dann die wenigstens eine Eigenfrequenz ermittelt, kann diese hinterlegte Eigenfrequenz entsprechend angepasst werden. Insoweit liegt dann ein adaptives Verfahren zum Ändern des vorläufigen Ansteuersignals in das modifizierte Ansteuersignal vor.

Gemäß einem Aspekt wird vorgeschlagen, dass in Abhängigkeit von einem sich der Windenergieanlage nähernden gefährdeten Flugtier, insbesondere Vogel oder Fledermaus, eine Drehzahlreduzierung vorgegeben wird, in Abhängigkeit von der vorgegebenen Drehzahlreduzierung eine Blattverstellung oder Pitchrate zum Verstellen des Blattwinkels als vorläufiges Ansteuersignal bestimmt wird, und das so bestimmte vorläufige Ansteuersignal in das modifizierte Ansteuersignal geändert wird.

Hier wurde besonders erkannt, dass zum Artenschutz eine schnelle Reduzierung der Drehzahl des Rotors in Betracht kommt, wenn sich ein gefährdetes Tier der Windenergieanlage fliegend nähert, nämlich ein Vogel oder eine Fledermaus jeweils einer gefährdeten Art. In diesem Fall sollte die Drehzahl möglichst schnell reduziert werden, was die Möglichkeit eröffnet, dass sich diese Tiere der Windenergieanlage auf einen möglichst geringen Abstand nähern können, bevor die Drehzahlreduzierung vorgenommen werden muss. Je langsamer die Drehzahlreduzierung erfolgt, umso früher, also bei umso größerem Abstand, und damit umso öfter, muss sie initiiert werden.

Eine schnelle Drehzahlreduzierung kann aber zu starke mechanische Belastungen durch die Anregung einer Schwingung einer schwingfähigen Komponente der Windenergieanlage zur Folge haben, nämlich durch ein entsprechendes Ansteuersignal. Daher wird vorgeschlagen, besonders im Falle eines solchen sich nähernden Tieres eine schnelle Drehzahlreduzierung durchzuführen, die dadurch erreicht werden kann, dass entsprechend schnell die Rotorblätter in ihrem Blattwinkel verstellt werden. Dieses Ansteuersignal zum Verstellen der Rotorblätter wird dabei um einen Frequenzanteil im Bereich der Eigenfrequenz geändert, nämlich in das modifizierte Ansteuerungssignal, um dadurch dennoch eine schnelle Verstellung der Rotorblätter zu erreichen. Es erfolgt aber ohne zu starke Anregung von Schwingung, insbesondere ohne zu starke Anregung einer Torsionsschwingung der Rotorblätter, aber vorzugsweise auch ohne zu starke Anregung einer Nickschwingung des Turmes durch die sich ebenfalls verändernde Windlast auf dem Rotor.

Erfindungsgemäß wird auch eine Windenergieanlage vorgeschlagen, wobei
- die Windenergieanlage einen Turm, einen Generator und einen Rotor mit in ihrem Blattwinkel verstellbaren Rotorblättern aufweist, und
- ein Betriebspunkt durch eine Anlagenleistung und eine Rotordrehzahl gekennzeichnet ist, wobei
- die Windenergieanlage dazu vorbereitet ist, so betrieben zu werden, dass
- zum Verändern oder Aufrechterhalten des Betriebspunktes wenigstens ein Aktuator jeweils über eine Ansteuergröße angesteuert wird und
- das Ansteuern des Aktuators eine Schwingungsanregung wenigstens einer Komponentenschwingung einer schwingungsfähigen Komponente der Windenergieanlage beeinflusst, und wobei
- die Windenergieanlage dazu vorbereitet ist, insbesondere eine Anlagensteuerung (103) aufweist, die dazu vorbereitet ist, ein Verfahren auszuführen, das die folgenden Schritte umfasst.

Es umfasst nämlich die Schritte:
- Bestimmen eines vorläufigen Ansteuersignals für die Ansteuergröße,
- Ändern des vorläufigen Ansteuersignals in ein modifiziertes Ansteuersignal, um die Schwingungsanregung zu verringern, wobei
- das vorläufige Ansteuersignal so in das modifizierte Ansteuersignal geändert wird, dass
- wenigstens ein Frequenzanteil aus dem vorläufigen Ansteuersignal mit einem Frequenzbereich um eine Eigenfrequenz der schwingungsfähigen Komponente reduziert wird, und/oder
- wenigstens ein Frequenzanteil aus einem aus dem vorläufigen Ansteuersignal zu erwartenden resultierenden Anregungssignal, das die Komponentenschwingung anregt, mit einem Frequenzbereich um eine Eigenfrequenz der schwingungsfähigen Komponente reduziert wird, und
- Ansteuern des Aktuators basierend auf dem modifizierten Ansteuersignal.

Eine solche Windenergieanlage ist somit dazu vorbereitet, ein Verfahren gemäß wenigstens einem der vorstehend erläuterten Aspekte auszuführen. Insbesondere ist dazu die Anlagensteuerung ausgebildet. Dazu kann das Verfahren in der Anlagensteuerung implementiert sein. Dazu kann ein Prozessrechner vorhanden sein, auf dem entsprechende Steuerprogramme hinterlegt sind und ausgeführt werden können.

Insbesondere weist die Windenergieanlage Sensoren zum Erfassen wenigstens einer Schwingung einer schwingungsfähigen Komponente der Windenergieanlage auf. Insbesondere sind Sensoren zum Erfassen einer Turmschwingung und/oder jeweils einer Blattschwingung eines Rotorblatts vorgesehen. Solche Sensoren können als Dehnungsmessstreifen ausgebildet sein, die jeweils an der schwingungsfähigen Komponente, insbesondere am Turm bzw. am Rotorblatt angeordnet sind, insbesondere im Bereich eines Turmfußes und/oder im Bereich einer Blattwurzel, um aus aufgenommenen Dehnungen auf eine Bewegung der jeweiligen Komponente zu schließen. Über die längere Aufnahme solcher Bewegungen kann die Schwingung erfasst werden. Besonders ist vorgesehen, eine solche erfasste Schwingung zurückzuführen, um daraus ein Dämpfungssignal abzuleiten, um damit das modifizierte Ansteuersignal weiter zu verändern.

Grundsätzlich kommt auch in Betracht, was für sämtliche genannten Aspekte gilt, die zur Schwingungsdämpfung genannt wurden, das Dämpfungssignal oder eine andere Dämpfungskomponente nicht unmittelbar auf das modifizierte Ansteuersignal aufzuschalten, sondern auf ein von dem modifizierten Ansteuersignal abgeleiteten Signal. Mit anderen Worten kann das modifizierte Ansteuersignal weiter verändert worden sein, und erst dann erfolgt die Aufschaltung des Dämpfungssignals. Insbesondere kann in Betracht kommen, dass das modifizierte Ansteuersignal ein Sollwert oder Sollsignal ist, das über einen Soll-/Istwert-Vergleich geführt wird und erst hinter dem Soll-/Istwert-Vergleich die Dämpfungskomponente aufgeschaltet wird, insbesondere hinter einem Regler oder Regelungsblock.

Nachfolgend wird die Erfindung exemplarisch unter Bezugnahme auf die begleitenden Figuren näher erläutert.
- Figur 1: zeigt eine Windenergieanlage in einer perspektivischen Darstellung.
- Figur 2: zeigt eine erste Regelungsstruktur zum Veranschaulichen der Erfindung.
- Figur 3: zeigt eine zweite vereinfachte Regelungsstruktur.
- Figur 4: zeigt ein Diagramm über eine sprungförmige Funktion mit und ohne Filter im Zeitbereich und ihre Auswirkung im Frequenzbereich.

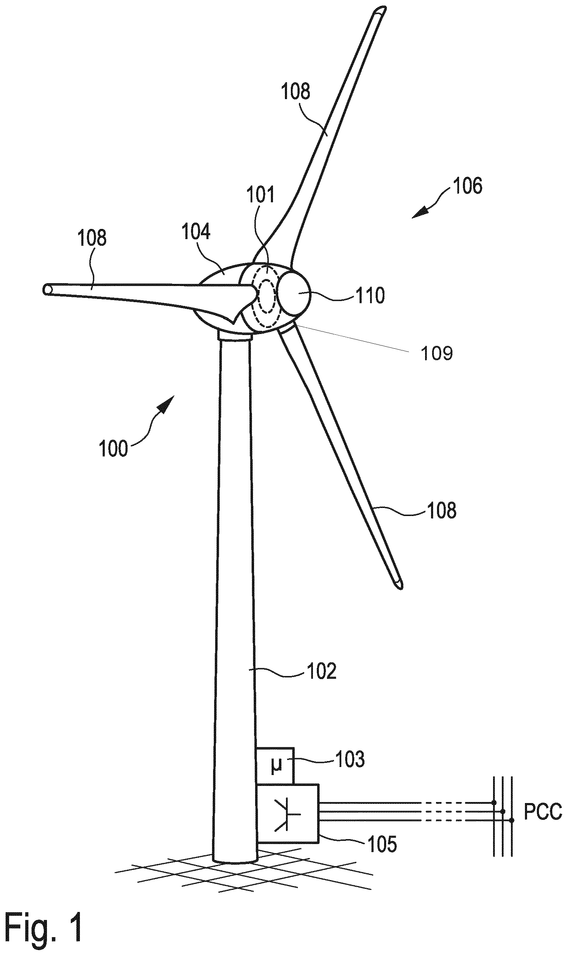

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

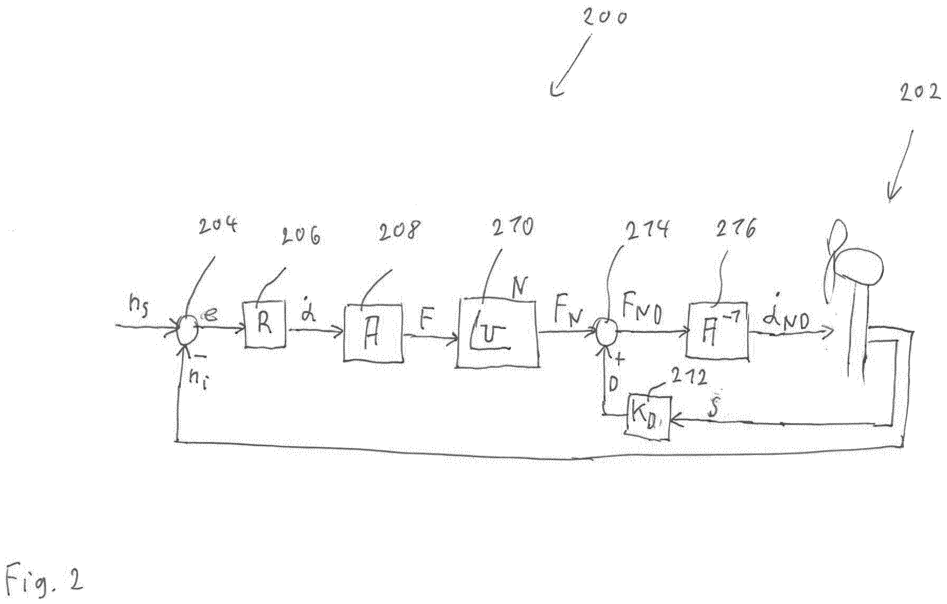

Figur 2 zeigt eine Regelungsstruktur 200 zum Veranschaulichen eines erfindungsgemäßen Verfahrens. Die Regelungsstruktur 200 betrifft eine Drehzahlregelung für die Windenergieanlage 202, die der Windenergieanlage 100 der Figur 1 entsprechen kann. Die hier exemplarisch gezeigte Drehzahlregelung arbeitet im Grunde so, dass in einer ersten Summierstelle 204 eine Regelabweichung e zwischen der Solldrehzahl nₛ und der Istdrehzahl nᵢ bestimmt wird. Über einen Reglerblock 206 wird eine Blattverstellrate *α̇* bestimmt. Die Blattverstellrate kann auch als Pitchrate bezeichnet werden. Alternativ kann statt einer Pitchrate auch ein Blattwinkel *α* bestimmt werden, um nur eine mögliche Variation zu erwähnen.

Eine solche Blattverstellrate *α̇* könnte an die Windenergieanlage 202, nämlich an einen Aktuator zum Verstellen der Blattwinkel der Rotorblätter, gegeben werden. Es wird nun aber vorgeschlagen, diese Blattverstellrate *α̇*, die insoweit eine Sollgröße für den genannten Aktuator darstellt, nicht unmittelbar an den Aktuator zu geben, sondern sie zuvor noch zu verändern, um etwaige Schwingungsanregungen, hier besonders auf das Rotorblatt, zu verringern.

Besonders kommt hier in Betracht, dass sich die Solldrehzahl nₛ sprungförmig ändert, wenn beispielsweise für einen Vogelschutz oder Fledermausschutz, wenn sich ein entsprechend gefährdetes Tier der Windenergieanlage nähert, die Rotordrehzahl schnellstmöglich reduzieren soll. In diesem Fall würde sich ein solcher Sprung auch in der Regelabweichung e widerspiegeln und über den Reglerblock 206 zu einer sprungförmigen Funktion der Blattverstellrate *α̇* führen. Eine solche sprungförmige Blattverstellrate kann zu einer Schwingungsanregung beispielsweise des Rotorblatts, aber auch des Turmes der Windenergieanlage führen. Eine starke Veränderung der Regelabweichung e und damit der Blattverstellrate *α̇* kann auch aus einer schnellen Veränderung der Istdrehzahl nᵢ resultieren.

Ganz allgemein, also ob durch eine Veränderung der Solldrehzahl oder durch eine Veränderung der Istdrehzahl, führt die Pitchrate zu einer Anregungskraft F auf die Windenergieanlage. Als Anregungskraft F kann bspw. eine Torsionskraft auf das betreffende Rotorblatt angesehen werden. Es kommt aber auch eine Kraft auf den Turm in Nickrichtung in Betracht. Auch eine Kraft quer zur Nickrichtung kann die Folge der geänderten Pitchrate sein. All diese Kräfte könnten jeweils zusätzlich insbesondere als lineare Überlagerung betrachtet werden, oftmals kann es aber reichen, nur eine davon zu betrachten, die am dominantesten ist.

Der Einfachheit halber wird hier nur eine Anregungskraft F betrachtet. Diese Anregungskraft F kann über eine Transformation A in dem Transformationsblock 208 aus der Pitchrate bestimmt werden. Somit ist sie die Sollgröße für den Aktuator, also die Pitchrate *α̇*, die zur relevanten Anregungskraft F führt, die einer Schwingung der betrachteten Komponente, hier z. B. des Rotorblatts, anregen kann.

Es ergibt sich also diese Anregungskraft F, die nämlich zur Anregung der betrachteten Komponente führen kann.

Die Transformation A im Transformationsblock 208 gibt somit den Zusammenhang zwischen der Pitchrate *α̇* und der Anregungskraft F wieder, die an der Windenergieanlage bzw. an der betreffenden Komponente, im Beispiel also an dem Rotorblatt, angreift. Dieser Zusammenhang kann aus der Systemkenntnis der Windenergieanlage einschließlich des betreffenden Aktuators abgeleitet werden. Dieser Zusammenhang kann durch eine Berechnung oder auch durch eine Simulation bestimmt werden. Es kommt auch in Betracht, einen solchen Zusammenhang aus Messungen aufzunehmen, wenn die nachfolgende Modifizierung der Pitchrate nicht implementiert ist bzw. nicht aktiv ist.

Diese Anregungskraft wird dann einem Filter, hier nämlich einem Notchfilter N, unterzogen, das durch den Filterblock 210 realisiert wird. Das Ergebnis ist somit eine gefilterte Anregungskraft F_{N}.

Zusätzlich kann noch eine Dämpfung durchgeführt werden, für die eine Schwingung S der Windenergieanlage erfasst wird. Diese Schwingung S ist im erläuterten Fall also die Schwingung des betreffenden Rotorblatts. Es kommt natürlich auch in Betracht, eine andere Schwingung zur Dämpfung zurückzuführen, wenn eine andere Schwingung betrachtet wird, beispielsweise die Turmschwingung, um eines der genannten Beispiele aufzugreifen.

Diese Schwingung S wird in einen Dämpfungsterm D umgerechnet und das wird durch den Dämpfungsblock 212 veranschaulicht.

In der zweiten Summierstelle 214 wird der Dämpfungsterm D auf die gefilterte Anregungskraft Fr, aufaddiert, sodass sich die gefilterte gedämpfte Anregungskraft F_{ND} ergibt.

Die so erhaltene gefilterte gedämpfte Anregungskraft F wird dann zurücktransformiert, nämlich über die inverse Transformation A⁻¹. Das ist durch den Rücktransformationsblock 216 veranschaulicht. Das Ergebnis ist eine gefilterte und gedämpfte Pitchrate *α̇*_{ND}. Diese so gefilterte Pitchrate *α̇*_{ND} kann dann auf die Windenergieanlage 202 gegeben werden, nämlich auf den betreffenden Aktuator, der die Blattwinkelverstellung entsprechend dieser Pitchrate durchführt.

Im Ergebnis wird also statt der Pitchrate *α̇*, die der Reglerblock 206 ausgibt, die gefilterte und gedämpfte Pitchrate *α̇*_{ND} verwendet. Sie führt dazu, dass in der Anregungskraft ein Frequenzanteil aus dem Frequenzbereich um eine Eigenfrequenz, der eine betreffende Eigenfrequenz anregen würde, reduziert ist. Dementsprechend ist nämlich das Notchfilter N des Filterblocks 210 ausgelegt.

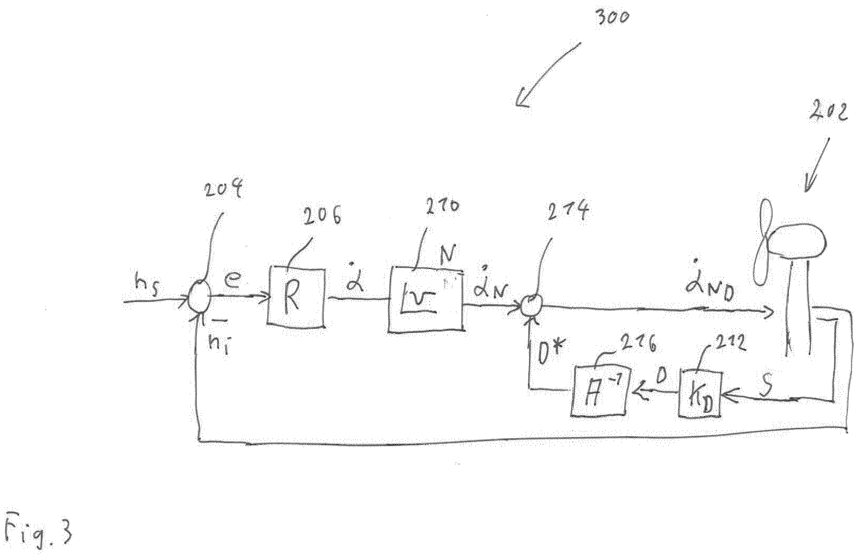

Figur 3 zeigt eine weitere Regelungsstruktur 300, die in ihrer Wirkung der Regelungsstruktur 200 der Figur 2 entsprechen kann, wenn die Elemente der Regelungsstruktur 200 als lineare und zeitinvariante Elemente angenommen werden können. Der Einfachheit halber werden für ähnliche Elemente gegenüber der Figur 2 gleiche Bezugszeichen verwendet. Im Idealfall sind diese Elemente auch tatsächlich identisch. Es können aber kleine Abweichungen in der Umsetzung in Betracht kommen. Insbesondere wird die Regelungsstruktur 300, Gleiches gilt für die Regelungsstruktur 200, in einem Prozessrechner umgesetzt und dort kann gegebenenfalls eine leichte Anpassung vorgenommen werden. Dazu kann beispielsweise gehören, dass unterschiedliche Signalamplituden, die zu verarbeiten sind, auf unterschiedliche Referenzwerte normiert sind, was sich in einem Verarbeitungsblock widerspiegeln kann.

Jedenfalls wurde erkannt, dass oftmals die Elemente der Regelungsstruktur 200 als lineare und zeitinvariante Elemente angenommen werden können. Unter dieser Voraussetzung kann, ausgehend von Figur 2, quasi der Rücktransformationsblock 216 nach links über die zweite Summierstelle 216 geschoben werden und auch dann die Reihenfolge zwischen dem Filterblock 210 und dem Rücktransformationsblock 216 getauscht werden. Der Transformationsblock 208 und der Rücktransformationsblock 216 heben sich dann auf. Beim veranschaulichend genannten Verschieben des Rücktransformationsblocks 216 über die zweite Summierstelle 214 muss dieser allerdings auch zum Dämpfungsblock 212 geschoben werden.

Diese Änderung ist in Figur 3 dargestellt, in der der Rücktransformationsblock 216 den Transformationsblock 208 aufhebt, sodass beide Blöcke dort in dem Hauptzweig nicht mehr dargestellt sind. Der Rücktransformationsblock 216 ist aber nur verschoben und daher nun hinter dem Dämpfungsblock 216 dargestellt.

Somit ergibt sich eine vereinfachte zweite Regelungsstruktur 300, bei der die Pitchrate *α̇* über dasselbe Notchfilter im Filterblock 210 geführt wird, wie in der ersten Regelungsstruktur 200 die Anregungskraft F. Am Ausgang des Filterblocks 210 ergibt sich dann eine gefilterte Pitchrate *α̇*_{N} und diese wird an der zweiten Summierstelle 214 mit einem modifizierten Dämpfungsterm D* addiert. Das Ergebnis ist die gefilterte und gedämpfte Pitchrate *α̇*_{ND} , die gemäß Figur 2 von dem Rücktransformationsblock 216 ausgegeben wird.

Der modifizierte Dämpfungsterm D* ergibt sich dadurch, dass das Schwingsignal S über den Dämpfungsblock 212 zum Dämpfungsterm D führt, der über die inverse Transformation gemäß dem Rücktransformationsblock 216 in den modifizierten Dämpfungsterm D* gewandelt wird. In der Praxis können aber der Dämpfungsblock 212 und der Rücktransformationsblock 216 zu einem Block vereint werden.

Die Figur 3 zeigt somit eine zweite Dämpfungsstruktur 300, die dann verwendet werden kann, wenn zwischen der Sollgröße für den betreffenden Aktuator, hier also die Pitchrate *α̇*, und der resultierenden Anregungskraft F ein linearer zeitvarianter Zusammenhang angenommen werden kann. Diese Annahme muss dann natürlich auch für die übrigen relevanten Elemente der Struktur, insbesondere den Filterblock 210, gelten.

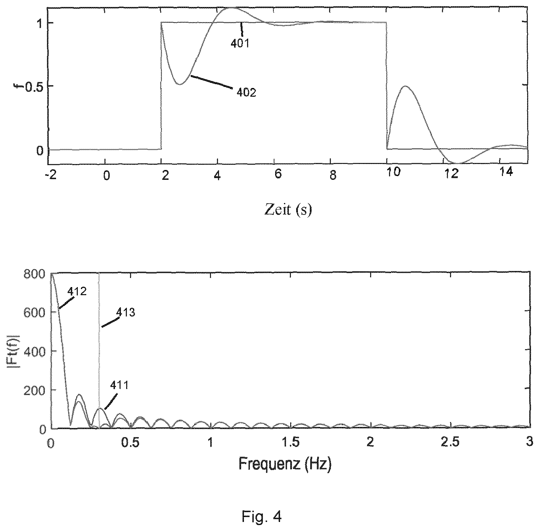

Figur 4 zeigt ein Diagramm mit zwei Einzeldiagrammen. Das obere Diagramm zeigt einen zeitlichen Verlauf einer sprungförmigen Funktion einer verallgemeinerten Sollgröße f. Mit dem Bezugszeichen 401 wird die sprungförmige Sollgröße ohne Modifizierung gezeigt, und die sprungförmige Sollgröße nach der Modifizierung, nämlich nach Filterung durch ein Notchfilter, wird als gefilterte Sprungfunktion 402 gezeigt. Grundsätzlich ist in dieser Zeitdarstellung zu erkennen, dass das Filtern der sprungförmigen Funktion 401 zu einem abklingenden Schwingungsanteil in der gefilterten Funktion 402 geführt hat. Es ist zu bemerken, dass die sprungförmige Funktion f hier zum Zeitpunkt t = 2 Sekunden von 0 auf 1 springt, also auf einen normierten Wert, und bei 10 Sekunden, also nach 8 Sekunden, wieder auf den Wert 0 zurückspringt. Bei jedem Sprung ergibt sich durch das Filter dieser abklingende Schwingungsanteil.

In dem unteren Diagramm ist das resultierende Frequenzsignal Ft(f) dem Betrage nach für die sprungförmige Funktion ohne Filter 401 und mit Filter 402 gezeigt. Es ergibt sich die ungefilterte Sprungfunktion im Frequenzbereich 411 und die gefilterte Sprungfunktion im Frequenzbereich 412. In dem Diagramm ist ebenfalls bei etwa 0,3 Hz eine beispielhafte Eigenfrequenz eines schwingungsfähigen Bauteils eingezeichnet. Das hier verwendete Notchfilter ist so eingestellt, dass die gefilterte Sprungfunktion im Frequenzbereich 412 der ungefilterten Sprungfunktion im Frequenzbereich 411 im Wesentlichen entspricht, aber einen signifikant geringeren Teil im Bereich der Eigenfrequenz 413 hat.

Die Erfindung betrifft somit ein Verfahren, ungünstige Anregungen besonders durch die Änderung des Generatormoments oder der Blattwinkel, z.B. auf den Turm zu verhindern. Dies sind im Besonderen Anregungen in der Eigenfrequenz kritischer Komponenten. Des Weiteren betrifft sie Details, wie dämpfende Verfahren in das Konzept eingebunden werden können.

Die Lasten auf dem Turmfuß sind von herausragender Bedeutung. In seitliche Richtung entstehen diese im Wesentlichen dadurch, dass der Generator bei der Stromerzeugung ein Drehmoment auf den Rotor erzeugt und das Gegenmoment vom Turm abgeleitet werden muss. Dafür muss sich die Turmspitze verdrehen. Grundsätzlich kann eine Verbiegung an sich groß genug werden, um den Turm zu zerstören (Extremlast) oder durch häufiges Auslenken mit kleineren Amplituden kann das Material ermüden (Betriebslasten).

Da sich die Windgeschwindigkeit und damit die nutzbare Leistung ständig ändert, muss das Generatormoment häufig angepasst werden. In der Folge ändert sich das Drehmoment auf den Turm und es kommt zu Schwingungen.

Die Erfindung dient der Reduktion von Betriebslasten. Dafür wird beobachtet, dass sich der Turm in erster Näherung wie ein harmonischer Oszillator verhält.

Harmonische Oszillatoren reagieren besonders auf Anregungen nahe ihrer Eigenfrequenz.

Es ist also zweckmäßig, das Drehmoment auf den Turm so zu regeln, dass sie möglichst geringe Frequenzanteile nahe der Eigenfrequenz des Turms hat.

Dafür gibt es eine Ausnahme: Es ist günstig, bereits vorhandene Schwingungen des Turmes zu dämpfen, indem das Generatormoment so geregelt wird, dass eine Kraft entsteht, die der Schwingung entgegenwirkt. Da der Turm im Allgemeinen nahe der Eigenfrequenz schwingt, ist der Einfluss dieser Dämpfung zu belassen.

Mögliche Schritte für den Anwendungsfall, dass das Generatormoment verändert wird, das Generatormoment bzw. seine Sollgröße also die Ansteuergröße bildet:
- Eine Drehzahlregelung gibt eine Generator-Sollleistung aus, , z.B. beim Ausregeln der Drehzahl auf eine optimale Drehzahl, um den Wind optimal zu nutzten.
- Berechnung des Sollmoments, das der auf den Turm dann wirkenden Kraft entspricht. Dieses Sollmoment kann ein Biegemoment sein, das auf den Turm wirkt, insbesondere bezogen auf einen Turmfuß. Es kann auch ein Torsionsmoment des Turmes sein. Es wird also eine Berechnung eines aus der Generator-Sollleistung zu erwartenden resultierenden Anregungssignals durchgeführt.
- Diese Größe, also das zu erwartende resultierende Anregungssignal, wird mit Hilfe eines Notchfilters gefiltert, um Frequenzanteile nahe der Turmeigenfrequenz zu reduzieren.
- Einen zusätzlichen Dämpfungsterm, der der aktuellen Turmschwingung entgegenwirkt, addieren, um ein gefiltertes und gedämpftes Anregungssignal zu erhalten.
- Aus dem so gewonnenen Sollmoment einen Sollwert berechnen und diesen ansteuern. Es wird also aus dem gefilterten und gedämpften Anregungssignal ein gefiltertes und gedämpftes Ansteuersignal gebildet, das dann die veränderte anzusteuernde also einzustellende Generator-Sollleistung bildet. Grundsätzlich kann statt der Generator-Sollleistung, bzw. überhaupt statt der Generatorleistung, ein Generator-Sollmoment bzw. Generatormoment verwendet werden.

In Längsrichtung entstehen die Kräfte auf den Turm im Wesentlichen dadurch, dass der Wind durch den Rotor Impuls verliert. Die Gegenkraft wirkt auf die Blätter und muss über den Turm abgeleitet werden. Dafür muss sich dieser nach hinten biegen und die Regelung lässt sich analog anwenden.

Das Konzept ist jedoch schwieriger umzusetzen, da hier über den Pitchwinkel, also den Blattwinkel, die Kraft geregelt werden muss, dieser jedoch viel träger ist als das Generatormoment.

Das Konzept lässt sich auch vereinfacht anwenden, wenn man beobachtet, dass auch eine reduzierte Anregung einen Vorteil darstellt, aber eine zuverlässige Berechnung der Kräfte, insbesondere in Längsrichtung, schwierig ist. Dazu wären exakte Kenntnisse der Aerodynamik erforderlich, also insbesondere des räumlichen Windfeldes. Alternativ lässt sich der Einfluss des Pitchwinkels auf die Kraft auf den Turm entwickeln und dementsprechend der Pitchwinkel selber filtern. Günstiger könnte man die Pitchrate selbst filtern, da ideales filtern, ableiten und integrieren kommutiert, also in seiner Signalreihenfolge verändert werden kann. Der Nachteil dieser Vereinfachung ist, dass z.B. eine Änderung der Windgeschwindigkeit nicht aufgefangen wird.

Die Eigenfrequenz des Turmes ist früh im Entwicklungsprozess eines Turmes bekannt und eine zentrale Größe. Sie wird hier direkt verwendet. Dies vermeidet Parametrierungsaufwand.

Es besteht Wahlfreiheit in der Wahl des Notchfilters, insbesondere können Frequenzen weiterweg von der Eigenfrequenz weniger stark gedämpft werden, um die Drehzahl besser kontrollieren zu können oder stärker gedämpft werden um Betriebslasten einzusparen.

Es wurde erkannt, dass das Prinzip sich noch weiter anwenden lässt, also insbesondere auf weitere Größen und Situationen anwendbar ist. Es kommen grds. alle Größen in Betracht, die einen wesentlichen, linearisierbaren Einfluss auf die entsprechenden Kräfte haben, wie beispielsweise Zwischengrößen zur Berechnung der Sollpitchrate.

Die Berechnungsschritte im Allgemeinen:
- Die Sollgröße eines Aktuators wird als Eingangsgröße berechnet, es wird als eine vorläufige Ansteuergröße berechnet.
- Umrechnung der Sollgröße auf die relevante Kraft, die zur Anregung der betrachteten Komponente führt (Rotorblatt, Turm). Es wird also aus der vorläufigen Ansteuergröße ein zu erwartendes resultierendes Anregungssignal berechnet.
- Diese Größe mit Hilfe eines Notchfilters filtern, um Frequenzanteile nahe der Turmeigenfrequenz zu reduzieren. Das zu erwartende resultierende Anregungssignal wird also mit Hilfe eines Notchfilters gefiltert.
- Ein Dämpfungsterm, der der Schwingung der betrachteten Komponente entgegenwirkt, addieren. Es wird also, was optional sein kann, der Dämpfungsterm auf das gefilterte zu erwartende resultierende Anregungssignal addiert.
- Die so gewonnene Größe auf die ursprüngliche Sollgröße des Aktuators zurückrechnen. Es wird somit das gedämpfte, gefilterte, zu erwartende resultierende Anregungssignal in das modifizierte Ansteuersignal zurückgerechnet, also zurücktransformiert.

Eine bevorzugte Anwendung wird für den Bereich Rapid Animal Protection vorgeschlagen, also ein schneller Schutz von gefährdeten Tieren, die sich fliegend der Windenergieanlage nähern, nämlich Vögel oder Fledermäuse: Falls ein Erkennungssystem, das als externes System ausgebildet sein kann, erkennt, dass in Kürze ein Vogel an der Anlage eintreffen könnte, wird die Drehzahl durch Herausdrehen der Rotorblätter, was auch als Rauspitchen der Blätter bezeichnet werden kann, und Einstellen eines möglichst hohen Generatordrehmoments reduziert, um diesen Vogel zu schützten. Bei verringerter Drehzahl ist bestenfalls die Bereitstellung einer verminderten elektrischen Wirkleistung möglich. Eine schnelle Reaktion erlaubt späterzu reagieren, wodurch nicht nur Phasen geringere Produktion verkürzt werden können, sondern auch gänzlich vermieden werden können, da Vögel abdrehen können und bei gleicher Fluggeschwindigkeit die kritische Flugzone kleiner wird.

Auf der anderen Seite geht schnelles Herauspitchen mit einem Hervorschnellen des Turms einher und eine Änderung des Generatormoments verändert das Kräftegleichgewicht in seitliche Richtung. Beides führt zu Turmschwingungen, welche Bauteilschäden bzw. Mehrkosten für stärkere Bauteile verursachen können.

Demzufolge wurde erkannt, dass es wichtig ist, eine schnelle, turmschwingungsarme Regelung zu finden.

Man könnte verschiedene Größen im oben beschriebenen Sinne filtern. Besonders wird dies für eine Sollbeschleunigungsleistung vorgeschlagen.

Sobald ein Signal zum Einschalten des Vogelschutzes kommt, also ein Signal, das ein Abregeln oder Anhalten der Windenergieanlage zum Schutz des Vogels auslöst, soll möglichst schnell reagiert werden, die native Reaktion wäre also sofortiges Rauspitchen mit höchster Geschwindigkeit. So ein Puls hat auf der anderen Seite ein breites Anregungsspektum, was auch die besonders empfindlichen Frequenzen um die Eigenfrequenz anregt und so zu starken Schwingungen des Turmes führt. Bei einer Notabschaltung kann das Problem durch mehrere Phasen mit unterschiedlicher Geschwindigkeit gelöst werden. Eine Grundidee ist nun, zur Regelung ein Notchfilter um die Eigenfrequenz herum zu verwenden, um gezielt die problematischen Anregungsfrequenzen zu entfernen.

Ein Vorteil der Methode ist, dass die Eigenfrequenz des Turmes zur Parametrierung ausreicht. Diese ist früh in der Entwicklung bekannt. Somit kann ein wesentlicher Teil der Methode vollautomatisch und ohne Tuning parametriert werden.

Folgende Anwendungen werden vorgeschlagen:
- Rapid Animal Protection / RAP Ereignisse
- Profilierte Notfahrt, bei der die Windenergieanlage auf einer vorbestimmten Trajektorie schnell heruntergefahren wird. Dazu wurden folgende Vorteile erkannt: Automatisierbare Parametrierung, Komplexität gering genug für sicherheitsgerichtete Implementierung, mögliche Lasteinsparung
- Allgemein jedes Pitchen, also eine Blattverstellung für jegliche Situationen, zumindest in solchen Fällen, in denen eine Lasteinsparung bzw. Lastreduzierung erreicht werden kann
- Vorgabe des Generatormomentsollwerts für diverse Anwendungen
- Zum Verhindern, dass sich kollektive Blattmode aufschaukeln. Hier wurde erkannt, dass solche kollektive Blattmode, also Schwingungen an allen Rotorblättern bei gemeinsamer Verstellung der Rotorblätter, zu einem Aufschaukeln von Schwingungen an den Rotorblättern führen können, da sie die gemessene Drehzahl beeinflusst und diese auf das Generatormoment wirkt. Auch dazu kann eine vorgeschlagene Filterung mit einem Notchfilter eine Verbesserung erreichen, das auf die Drehzahl angewendet werden kann, um hier eine Anregung zu minimieren.

Die Erfindung stellt im Grunde eine Lastreduktionsoption dar, deren wesentlicher Parameter früh und einfach bekannt ist.

## Patentansprüche

1. Verfahren zum Steuern einer Windenergieanlage (100, 202), wobei
- die Windenergieanlage (100, 202) einen Turm (102), einen Generator (101) und einen Rotor (106) mit in ihrem Blattwinkel verstellbaren Rotorblättern (108) aufweist,
- ein Betriebspunkt durch eine Anlagenleistung und eine Rotordrehzahl gekennzeichnet ist,
- zum Verändern oder Aufrechterhalten des Betriebspunktes wenigstens ein Aktuator jeweils über eine Ansteuergröße angesteuert wird, und
- das Ansteuern des Aktuators eine Schwingungsanregung wenigstens einer Komponentenschwingung einer schwingungsfähigen Komponente der Windenergieanlage (100, 202) beeinflusst,
umfassend die Schritte:
- Bestimmen eines vorläufigen Ansteuersignals (401) für die Ansteuergröße,
- Ändern des vorläufigen Ansteuersignals (401) in ein modifiziertes Ansteuersignal (402), um die Schwingungsanregung zu verringern, wobei
- das vorläufige Ansteuersignal (401) so in das modifizierte Ansteuersignal (402) geändert wird, dass
- wenigstens ein Frequenzanteil aus dem vorläufigen Ansteuersignal (401) mit einem Frequenzbereich um eine Eigenfrequenz (413) der schwingungsfähigen Komponente reduziert wird, und/oder
- wenigstens ein Frequenzanteil aus einem aus dem vorläufigen Ansteuersignal (401) zu erwartenden resultierenden Anregungssignal, das die Komponentenschwingung anregt, mit einem Frequenzbereich um die Eigenfrequenz (413) der schwingungsfähigen Komponente reduziert wird, und
- Ansteuern des Aktuators basierend auf dem modifizierten Ansteuersignal (401).

2. Verfahren nach Anspruch 1, **dadurch gekennzeichnet, dass**
- zur Dämpfung der wenigstens einen Komponentenschwingung ein Dämpfungssignal auf das modifizierte Ansteuersignal aufgeschaltet wird, insbesondere so, dass
- das Dämpfungssignal in Abhängigkeit von wenigstens einer erfassten Komponentenschwingung bestimmt wird.

3. Verfahren nach Anspruch 1 oder 2, **dadurch gekennzeichnet, dass**
- zum Ändern des vorläufigen Ansteuersignals in das modifizierte Ansteuersignal ein Bandsperrfilter, insbesondere Notchfilter (N) verwendet wird, durch den der wenigstens eine Frequenzanteil aus dem vorläufigen Ansteuersignal reduziert wird.

4. Verfahren nach einem der vorstehenden Ansprüche, **dadurch gekennzeichnet, dass**
- das vorläufige Ansteuersignal sprungförmig ist und/oder
- das vorläufige Ansteuersignal ein vorgegebener Sollwert ist und/oder
- das vorläufige Ansteuersignal zum Verändern des Betriebspunktes vorgegeben wird.

5. Verfahren nach einem der vorstehenden Ansprüche, **dadurch gekennzeichnet, dass**
- die Ansteuergröße ein Drehmomentsollwert des Generators der Windenergieanlage (100, 202) ist, und insbesondere der Drehmomentsollwert aus einem empfangenen Leistungssollwert bestimmt wird,
- die resultierende Schwingungsanregung eine Anregung einer Turmschwingung ist, insbesondere eine Biegeschwingung des Turms (102), und
- das modifizierte Ansteuersignal so bestimmt wird, dass ein Frequenzanteil um die Eigenfrequenz des Turmes (102), insbesondere bezogen auf eine Biegeschwingung des Turmes (102) reduziert wird.

6. Verfahren nach einem der vorstehenden Ansprüche, **dadurch gekennzeichnet, dass**
- die Ansteuergröße ein Blattwinkel oder eine Pitchrate (*α̇*) zum Verstellen jeweils eines Blattwinkels ist, und insbesondere der Blattwinkel bzw. die Pitchrate (*α̇*) aus einer Anforderung einer Einregelung und/oder Änderung der Rotordrehzahl bestimmt wird,
- die resultierende Schwingungsanregung eine Anregung wenigstens einer Blattschwingung ist, insbesondere einer Torsionsschwingung des Blattes, und/oder einer kollektiven Schwingmode der Blätter zusammen mit einem Spinner (110) oder einer Nabe und
- das modifizierte Ansteuersignal so bestimmt wird, dass ein Frequenzanteil um die Eigenfrequenz des Blattes, insbesondere bezogen auf die Torsionsschwingung des Blattes, reduziert wird bzw. das modifizierte Ansteuersignal so bestimmt wird, dass ein Frequenzanteil um die Eigenfrequenz der kollektiven Schwingmode der Blätter und des Spinners (110) oder der Nabe reduziert wird.

7. Verfahren nach einem der vorstehenden Ansprüche, **dadurch gekennzeichnet, dass**
- der wenigstens eine Aktuator über die wenigstens eine Ansteuergröße angesteuert wird, um den aktuellen Betriebspunkt in einen neuen Betriebspunkt zu ändern, und
- die Windenergieanlage (100, 202) im neuen Betriebspunkt gegenüber dem aktuellen Betriebspunkt
- eine reduzierte Anlagenleistung und/oder
- eine reduzierte Drehzahl aufweist, und/oder
- der neue Betriebspunkt ein Anlagenstopp ist und/oder
- das vorläufige Ansteuersignal für eine möglichst schnelle Veränderung zum neuen Betriebspunkt bestimmt wird, insbesondere für eine Notabschaltung der Windenergieanlage (100, 202) und/oder eine Notbremsung des Rotors.

8. Verfahren nach einem der vorstehenden Ansprüche, **dadurch gekennzeichnet, dass**
- das vorläufige Ansteuersignal als zeitlicher Verlauf vorgegeben wird, mit sich mehrfach und/oder kontinuierlich verändernden Werten, insbesondere
- mit mehreren zeitlich verteilten Stützstellen, wobei der Verlauf jeweils zwischen zwei benachbarten Stützstellen einen linearen Abschnitt aufweist.

9. Verfahren nach einem der vorstehenden Ansprüche, **dadurch gekennzeichnet, dass**
- in Abhängigkeit von einem anzusteuernden Zielarbeitspunkt, insbesondere zum Ausführen eines Nothalts,
- und optional in Abhängigkeit von einem aktuellen Arbeitspunkt,
- ein zeitlicher Verlauf des vorläufigen Ansteuersignals ausgewählt wird, insbesondere aus einer Tabelle.

10. Verfahren nach einem der vorstehenden Ansprüche, **dadurch gekennzeichnet, dass**
- die Ansteuergröße ein Blattwinkel oder eine Pitchrate (*α̇*) zum Verstellen jeweils eines Blattwinkels ist, und insbesondere der Blattwinkel bzw. die Pitchrate (*α̇*) aus einer Anforderung einer Einregelung und/oder Änderung der Rotordrehzahl bestimmt wird, und
- das modifizierte Ansteuersignal so bestimmt wird, dass
- wenigstens ein Frequenzanteil aus dem vorläufigen Ansteuersignal mit einem Frequenzbereich um wenigstens eine Eigenfrequenz des Turmes (102), insbesondere um eine Eigenfrequenz einer Biegung des Turmes (102) in Nickrichtung reduziert wird und/oder
- wenigstens ein Frequenzanteil aus einem aus dem vorläufigen Ansteuersignal zu erwartenden resultierenden Anregungssignal, das die Turmschwingung anregt, mit einem Frequenzbereich um eine Eigenfrequenz des Turmes (102), insbesondere um eine Eigenfrequenz einer Biegung des Turmes (102) in Nickrichtung reduziert wird.

11. Verfahren nach einem der vorstehenden Ansprüche, **dadurch gekennzeichnet, dass**
- die wenigstens eine Eigenfrequenz im laufenden Betrieb aus aufgenommenen Messgrößen ermittelt wird, insbesondere durch Verwendung einer Parameteridentifikation, und
- das vorläufige Ansteuersignal (401) unter Verwendung dieser wenigstens einen ermittelten Eigenfrequenz in das modifizierte Ansteuersignal (402) geändert wird, und/oder
- das Ändern des vorläufigen Ansteuersignals (401) in das modifizierte Ansteuersignal (402) adaptiv erfolgt, indem wenigstens eine verwendete Eigenfrequenz an die wenigstens eine erfasste Eigenfrequenz angepasst wird.

12. Verfahren nach einem der vorstehenden Ansprüche, **dadurch gekennzeichnet, dass**
- in Abhängigkeit von einem sich der Windenergieanlage (100, 202) nähernden gefährdeten Flugtier, insbesondere Vogel oder Fledermaus, eine Drehzahlreduzierung vorgegeben wird,
- in Abhängigkeit von der vorgegebenen Drehzahlreduzierung eine Blattverstellung oder Pitchrate (*α̇*) zum Verstellen des Blattwinkels als vorläufiges Ansteuersignal (401) bestimmt wird, und
- das so bestimmte vorläufige Ansteuersignal in das modifizierte Ansteuersignal (402) geändert wird.

13. Windenergieanlage (100, 202), wobei
- die Windenergieanlage (100, 202) einen Turm (102), einen Generator (101) und einen Rotor (106) mit in ihrem Blattwinkel verstellbaren Rotorblättern (108) aufweist, und
- ein Betriebspunkt durch eine Anlagenleistung und eine Rotordrehzahl gekennzeichnet ist, wobei
- die Windenergieanlage (100, 202) dazu vorbereitet ist, so betrieben zu werden, dass
- zum Verändern oder Aufrechterhalten des Betriebspunktes wenigstens ein Aktuator jeweils über eine Ansteuergröße angesteuert wird und
- das Ansteuern des Aktuators eine Schwingungsanregung wenigstens einer Komponentenschwingung einer schwingungsfähigen Komponente der Windenergieanlage (100, 202) beeinflusst, und wobei
- die Windenergieanlage (100, 202) dazu vorbereitet ist, insbesondere eine Anlagensteuerung (103) aufweist, die dazu vorbereitet ist, ein Verfahren auszuführen,
umfassend die Schritte:
- Bestimmen eines vorläufigen Ansteuersignals für die Ansteuergröße,
- Ändern des vorläufigen Ansteuersignals (401) in ein modifiziertes Ansteuersignal (402), um die Schwingungsanregung zu verringern, wobei
- das vorläufige Ansteuersignal (401) so in das modifizierte Ansteuersignal (402) geändert wird, dass
- wenigstens ein Frequenzanteil aus dem vorläufigen Ansteuersignal (401) mit einem Frequenzbereich um eine Eigenfrequenz der schwingungsfähigen Komponente reduziert wird, und/oder
- wenigstens ein Frequenzanteil aus einem aus dem vorläufigen Ansteuersignal (401) zu erwartenden resultierenden Anregungssignal, das die Komponentenschwingung anregt, mit einem Frequenzbereich um eine Eigenfrequenz der schwingungsfähigen Komponente reduziert wird, und
- Ansteuern des Aktuators basierend auf dem modifizierten Ansteuersignal (402).

14. Windenergieanlage (100, 202) nach Anspruch 1, **dadurch gekennzeichnet, dass**
- die Windenergieanlage (100, 202), insbesondere die Anlagensteuerung (103), dazu vorbereitet ist, ein Verfahren nach einem der Ansprüche 1 bis 12 auszuführen und/oder
- Sensoren zum Erfassen wenigstens einer Schwingung einer schwingungsfähigen Komponente der Windenergieanlage (100, 202) vorgesehen sind.
